# EUROPÄISCHE PATENTANMELDUNG

(11) **EP 2 727 679 A1**
(43) Veröffentlichungstag der Anmeldung: **07.05.2014**
(21) Anmeldenummer: 13005153.5
(22) Anmeldetag: 30.10.2013
(51) Int. Cl.: B23K 15/00, B21B 1/22, B23K 15/08, F28F 13/02

(54) **Verfahren zur Modifikation der Oberflächen von metallischen Werkstoffen unter Anwendung eines Elektronstrahles**

(30) Priorität: 30.10.2012 DE 102012021254
(71) Anmelder: Josch Strahlschweisstechnik GmbH, 06193 Petersberg / Ortsteil Teicha (DE)
(72) Erfinder: Hantke, Andreas, 06128 Halle/Saale (DE); Wesser, Lars, 06193 Wettin-Löbejün/Ortsteil Friedrichsschwarz (DE); Schenke, Rolf Joachim, 39118 Magdeburg (DE)
(74) Vertreter: Schuster, Müller & Partner

(57) **Zusammenfassung**

Diese Anmeldung betrifft ein Verfahren zur Modifikation der Oberflächen von metallischen Werkstoffen (1) zur Herausbildung von strukturierten Oberflächen (2, 3) auf rohr- und plattenförmigen und beliebig geformten Körpern (1), bei dem die Oberflächenstrukturen in Form von Makro- und Mikrostrukturen (2, 3) ausgebildet sind und bei dem unter Anwendung eines Elektronenstrahles und unter Beachtung geforderter Oberflächenstrukturen über die Einstellung wählbarer Parameter des Elektronenstrahles wie Strahlpulsung, Strahlablenkung, Strahlfokussierung und Relativbewegung zwischen Werkstück und Elektronenstrahl auf den Oberflächen von metallischen Werkstoffen definierte wiederholbare Makro- und Mikrostrukturen (2, 3) erzeugt werden.

## Beschreibung

Derartige Verfahren sind bekannt. So beschreibt die EP 1 318 371 B1 ein Verfahren, bei dem Flächen zur Wärmeübertragung, insbesondere für Verdampfungs- und Kondensationsprozesse von Fluiden auf rohr- oder plattenförmigen Körpern mit einer aus einer Grundfläche herausragenden Mikrostruktur von stiftförmigen Vorsprüngen ausgebildet werden, welche mit einer Mindesthöhe auf der Grundlage galvanisiert sind, und diese Grundfläche ganz oder teilweise mit Vorsprüngen bedeckt ist, wobei die stiftförmigen Vorsprünge in Form von gesonderten Mikrostrukturen aufgebracht werden. Die EP 1 318 371 B1 beschreibt die physikalischen Grundlagen von Verdampfungs- und Kondensationsprozessen und beschreibt weiterhin die Erzeugung von regelmäßigen Mikrostrukturen in Form von stift- und pilzförmigen Vorsprüngen auf einer Oberfläche durch einen galvanischen Prozess.

Die EP 1 387 734 B 1 beschreibt ein Verfahren zur Herausbildung von Strukturen auf Oberflächen von Werkstücken, wobei das Verfahren gekennzeichnet ist durch ein Veranlassen einer Relativbewegung zwischen dem Werkstück und einem Leistungsstrahl in einer Durchlaufrichtung, um eine Reihe von Stellen auf dem Werkstück dem Leistungsstrahl auszusetzen, wodurch durch entsprechende Bewegungen des Leistungsstrahls auf der Oberfläche des Werkstückes Aufschmelzungen erfolgen und so Erhöhungen oder Vertiefungen entstehen. Ferner beschreibt die EP 1 387 734 B 1 die Erzeugung von regelmäßigen Makrostrukturen durch die Überlagerung einer primären und einer sekundären Strahlablenkung wobei das Werkstück in einer Durchlaufrichtung bewegt wird. Einsatzgebiete sind die Erhöhung der mechanischen Reibung zwischen zwei Materialien, zur Erhöhung der mechanischen Verriegelung (Verklemmung) zwischen zwei Materialien und die Strukturierung einer Bremsbelagträgerplatte zur Verbesserung des Verklebens zwischen Trägerplatte und Bremsbelag.

Die EP 1 551 590 B 1 beschreibt in analoger Weise ein Verfahren zur Modifikation der Struktur eines Werkstückes, wobei das Verfahren ein Verursachen einer Relativbewegung zwischen einem Energiestrahl und einem Werkstück umfasst, so dass in der jeweiligen Region des Werkstückes Material geschmolzen, das geschmolzene Material verschoben wird und in wechselnder Folge Erhebungen und Vertiefungen bildet. EP 1 551 590 B 1 beschreibt die Erzeugung von regelmäßigen, hakenförmigen Makrostrukturen zur Verklemmung zwischen zwei festen Werkstoffen wie zum Beispiel Metall mit Kunststoff (Composite-Verbindung) und die Verbesserung der Benetzung von Metalloberflächen mit Klebstoff oder Harz).

Die EP 1 769 906 A1 beschreibt die Herstellung von Verbundbauteilen aus Wolfram und Kupfer als stoffschlüssige Verbindung für den Einsatz bei hohen Temperaturen. Durch die Strukturierung der Wolframoberfläche in Form von regelmäßigen Makrostrukturen wird die Oberfläche vergrößert und Spannungen durch verschiedene Ausdehnungskoeffizienten beider Werkstoffe können sich besser abbauen.

Mit den bekannten Lösungen sollen entweder Mikrostrukturen durch galvanische Prozesse oder regelmäßige Makrostrukturen durch Strahlprozesse mit dem Ziel der Vergrößerung der Oberfläche erzielt werden, jedoch sind deren Einsatzmöglichkeiten sehr begrenzt.

Die vorliegende Erfindung stellt sich die Aufgabe, Mikro- und Makrostrukturen auf metallischen Oberflächen in unterschiedlicher Gestaltung zu erzeugen und aufzubringen, dies durch Herausbildung wiederholbarer Mikro- und Makrostrukturen.

Erfindungsgemäß wird diese Aufgabe mit den Merkmalen des Anspruches 1 gelöst. Besondere Ausgestaltungen und vorteilhafte Lösungen sind in den Unteransprüchen angegeben.

So erfolgt die Erzeugung der Oberflächenstrukturen in Form von Makro- und Mikrostrukturen durch einen Leistungsstrahl, einen Elektronenstrahl, der in komplexer Art und Weise gesteuert wird. Dabei erfolgt die Bearbeitung vorzugsweise in einer Vakuumkammer, im Feinvakuum oder Hochvakuum. Der Elektronenstrahl trifft partiell und temporär auf einzelne Bereiche der zu bearbeitenden Oberfläche eines Werkstückes, was dort zur Aufschmelzung und Verdampfung von Material führt. Das Auftreffen des Elektronenstrahls bewirkt, dass das aufgeschmolzene Material bewegt wird und so in Abhängigkeit der Bearbeitungstechnologie regelmäßige Strukturen, die durch gezielte Parameterwahl des Elektronenstrahls entstehen und diese Strukturen mit unregelmäßigen stochastischen Mikrostrukturen überlagert werden.

Makrostrukturen an der Oberfläche entstehen durch die Abtragungen und Anhäufungen von Material, wobei das Material während der Materialbewegung mit der Oberfläche verbunden bleibt. An den Abtragungsstellen entstehen Vertiefungen (Unterwölbungen, Täler) in der Oberfläche. An den Anhäufungsstellen entstehen Erhöhungen (Überwölbungen, Berge) an der Oberfläche. Die Größen von Makrostrukturen liegen im Bereich von 100 µm und 2 mm.

Mikrostrukturen an der Oberfläche entstehen bei einer gezielt eingestellten sehr hohen Prozessdynamik, durch hervorgerufene Schmelzbadturbulenzen und -verwirbelungen, durch die Überlagerung und Vernetzung von Schmelz- und Erstarrungsbereichen und dadurch, dass sich sehr kleine Schmelzbadbereiche kurzzeitig von der Oberfläche lösen und an anderer Stelle wieder anlagern, anschmelzen und erstarren wodurch unregelmäßige Abriss- und Wiederanlagerungsstellen entstehen. Diese Mikrostrukturen haben eine unregelmäßige Anordnung und Form. Die typischen Größen der Mikrostrukturen liegen zwischen 10 µm und 200 µm.

Insbesondere vorteilhaft ist die nahezu simultane Überlagerung von relativ regelmäßigen Makrostrukturen mit unregelmäßigen stochastischen Mikrostrukturen in einem Prozessdurchlauf.

Es gehört zur Erfindung, dass die Herausbildung der gewünschten Makro- und Mikrostrukturen durch zeitgleich synchron und asynchron überlagerte Steuerung der Funktionen Strahlpulsung, Strahlablenkung, Strahlfokussierung und ein- oder mehrdimensionale Relativbewegungen zwischen Werkstück und Elektronenstrahl erzeugt werden.

Die Strahlpulsung dient bezogen auf eine zu strukturierende Spur dem zyklischen Ein- und Ausschalten des Elektronenstrahls. Verwendete Pulsfrequenzen liegen zwischen 10 Hz und 200 Hz, die Pulsdauer entsprechend zwischen 5 ms und 100 ms und die Pulstastverhältnisse zwischen 5 % bis 50 %.

Die dynamische Strahlablenkung erfolgt durch ein magnetisches Spulensystem in zwei senkrecht aufeinander stehenden Achsen (X-Y) und geeignete Ablenkfiguren. Die Ablenkfiguren bestehen aus einzelnen Punkten, die nacheinander angesprungen werden. Diese Ablenkfiguren bestehen aus 100-4000 Punkten. Die Figurablenkfrequenzen liegen zwischen 10 Hz und 2000 Hz. Die Punktfrequenzen liegen im Bereich von 1000 Hz und 8 MHz. Die Verweilzeit pro Punkt beträgt zwischen 0,125 µs und 1 ms. Einzelne Ablenkfiguren werden vollständig oder teilweise, einmalig oder wiederholt abgefahren.

Die dynamische Strahlablenkung wird optional mit einer statischen Strahlablenkung überlagert, wodurch eine Bewegung der Ablenkfigur auf der Werkstückoberfläche erzeugt wird. Die integrierte Tangentialsteuerung erlaubt die vektorielle Drehung der Ablenkfigur in die aktuelle Bearbeitungsrichtung, wobei diese statisch oder dynamisch erfolgen kann.

Die Strahlfokussierung erfolgt durch eine oder mehrere magnetische Fokussierspulen, wobei die Strahlfokussierung statisch und dynamisch erfolgt. Durch die statische Strahlfokussierung wird die Fokuslage in Bezug zur Werkstückoberfläche eingestellt. Sie wird optional durch eine dynamische Strahlfokussierung überlagert. Dabei wird die dynamische Strahlfokussierung synchron zur dynamischen Strahlablenkung gesteuert.

Die Relativbewegung zwischen Werkstück und Elektronenstrahl wird durch die Bewegung des Werkstückes oder/und des Elektronenstrahls über NC-gesteuerte mechanische und elektrische Achsen erzeugt, wobei sowohl nur eine einzelne Achse bewegt wird oder es werden die Bewegungen mehrerer Achsen überlagert (interpoliert). Typische Bearbeitungsgeschwindigkeiten für das vorgestellte Verfahren liegen im Bereich zwischen 10 bis 100 mm/s.

Mit dem vorgestellten Verfahren können makro- und mikrostrukturierte Oberflächen auf metallischen Werkstücken ausgebildet werden, die in Kombination von Strahlpulsung, Strahlablenkung, Strahlfokussierung und ein- oder mehrdimensionaler Relativbewegungen zwischen Werkstück und Elektronenstrahl Strukturen herausbilden, die aus relativ regelmäßigen Makrostrukturen mit überlagerten, unregelmäßigen stochastischen Mikrostrukturen bestehen. Die Bearbeitung eines Werkstückes zur Herausbildung der Makro- und Mikrostrukturen erfolgt mittels eines gepulsten Strahles, einer Strahlpulsung, deren Anpassung an die Bearbeitungsgeschwindigkeit über die Pulsfrequenz erfolgt.

Zur Erfindung gehört auch, dass durch eine geeignete Wahl der Parameter für Ablenkfigurfrequenz, Pulsfrequenz und Tastverhältnis festgelegt wird, ob die Ablenkfigur entweder einmal komplett, mehrmals komplett oder nur teilweise abgefahren wird.

Mit dem vorgestellten Verfahren können gewünschte makro- und mikrostrukturierte Außen- oder Innenoberflächen von Rohren, Rundmaterialien sowie ebenen und gewölbten Flächen in einem Arbeitsgang ausgebildet werden.

Mit der vorgestellten Lösung können ferner Werkstücke mit unregelmäßigen Oberflächen wie beispielsweise Beulenrohre mit makro- und mikrostrukturierten Außenoberflächen ausgebildet werden.

Makro- und mikrostrukturierte Innenoberflächen von Kanälen, Rohren, Behältern oder anderen Bauteilen können durch das Strukturieren von ebenen oder gewölbten Blechen auch vom Coil hergestellt werden, die anschließend zu Kanälen, Rohren, Behältern oder anderen Bauteilen geformt und geschweißt werden.

Mit nachfolgendem Ausführungsbeispiel soll die Erfindung näher erläutert werden.

Die dazugehörigen Abbildungen zeigen:
Fig. 1: eine Makrostruktur in Schnittdarstellung (Schema)
Fig. 2: eine Makrostruktur mit überlagerter Mikrostruktur in Schnittdarstellung (Schema)
Fig. 3: eine Makrostruktur mit überlagerter Mikrostruktur - Schnitt und Draufsicht unter einem Winkel (Schema)
Fig. 4: eine Makrostruktur mit überlagerter Mikrostruktur - Schnitt und Draufsicht unter einem Winkel (detailliertes Schema)
Fig. 5: eine Makrostruktur mit überlagerter Mikrostruktur P3 - Draufsicht - 50-fach (REM-Aufnahme)
Fig. 6: eine Makrostruktur mit überlagerter Mikrostruktur P3a - Draufsicht unter einem Winkel von 45° - 50-fach (REM-Aufnahme)
Fig. 7: eine Makrostruktur mit überlagerter Mikrostruktur P3 - Draufsicht unter einem Winkel von 45° - 20-fach (REM-Aufnahme)
Fig. 8: eine Makrostruktur mit überlagerter Mikrostruktur P3 - Draufsicht unter einem Winkel von 45° - 50-fach (REM-Aufnahme) Fig. 9: eine Makrostruktur mit Mikrostruktur P1 in einer Draufsicht (Mikroskopaufnahme)
Fig. 10: eine Makrostruktur mit Mikrostruktur P1 in einer Draufsicht (Mikroskopaufnahme vergrößert)
Fig. 11: ein Rohr mit Struktur längs zur Rohrachse als Einzelspuren in einer Draufsicht unter einem Winkel
Fig. 12: ein Rohr mit Struktur längs zur Rohrachse als eine Spiralspur in einer Draufsicht
Fig. 13: ein Rohr mit Struktur quer zur Rohrachse als Längsspuren in einer Draufsicht
Fig. 14: eine ebene Fläche mit Struktur aus nebeneinanderliegenden Längsspuren in einer Draufsicht
Fig. 15: ein Beulenrohr mit einer Struktur als Schnittdarstellung
Fig. 16: ein Rohr mit einer innenliegenden Struktur, hergestellt aus 2 Rohrhälften als Schweißkonstruktion
Fig. 17: einen Kanal mit innenliegender Struktur als Schweißkonstruktion
Fig. 18: eine feine Makrostruktur mit überlagert Mikrostruktur in einem Ausschnitt (20 mm x 20 mm)
Fig. 19: eine grobe Makrostruktur mit überlagerter Mikrostruktur in einem Ausschnitt (20 mm x 20 mm)
Fig. 20: ein grobes Beulenrohr mit Makro- und Mikrostruktur in einem Ausschnitt (100 mm x 100 mm)
Fig. 21: ein grobes Beulenrohr mit Makro- und Mikrostruktur in einer Detailaufnahme 20 mm x 20 mm von Figur 20
Fig. 22: ein feines Beulenrohr mit Makro- und Mikrostruktur in einem Ausschnitt (20 mm x 20 mm)
Fig. 23: ein Glattrohr mit Makro- und Mikrostruktur, längs und nicht überlappend in einem Ausschnitt (20 mm x 20 mm)
Fig. 24: ein Glattrohr mit Makro- und Mikrostruktur, quer und nicht überlappend in einem Ausschnitt (20 mm x 20 mm).

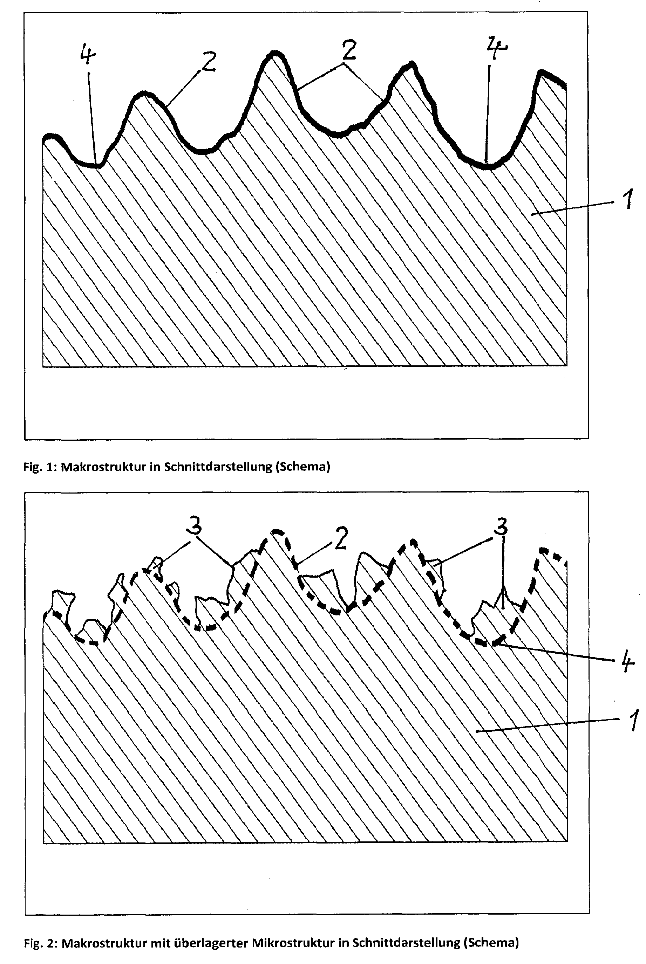

Die prinziphaften Darstellungen der Figuren 1 und 2 verdeutlichen die Ausbildung und die Anordnung von Makrostrukturen 2 und Mikrostrukturen 3 an der Oberfläche eines Werkstückes 1, welche durch die Bestrahlung der Oberfläche des jeweiligen Werkstückes 1 mittels eines Elektronenstrahls herausgebildet werden, dies durch eine entsprechende Regelung und Steuerung des Elektronenstrahls. Die Makrostrukturen 2 bilden an den Oberflächen der zu bearbeitenden Werkstücke in relativ regelmäßigen Abständen Täler 4 heraus, so dass zwischen jeweils zwei Tälern 4 eine Makrostruktur 2 herausgebildet wird. Dies in chronologischer Folge der Führung eines Elektronenstrahles. Bei der Bearbeitung eines Werkstückes 1 werden nicht nur die Makrostrukturen 2 herausgebildet, sondern gleichfalls Mikrostrukturen 3, die sich an den Makrostrukturen 2 anlagern.

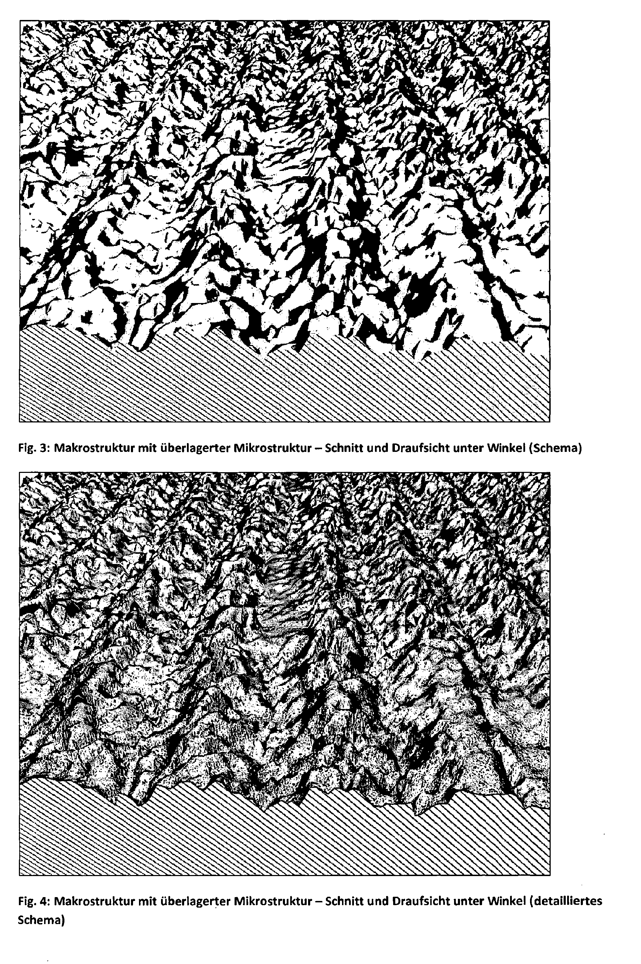

Die Figuren 3 und 4 zeigen schematische, bildhafte Darstellungen in verschiedenen Profilen und Mustern als Makro- und Mikrostrukturen 2, 3. Sowohl die Makro- als auch die Mikrostrukturen 2, 3 werden herausgebildet durch eine gezielte Elektronenstrahlführung, welche sich in Abhängigkeit von der Bearbeitungstechnologie als Abtragungen und Anhäufungen von Material auf der Oberfläche herausgebildeten und mit der Oberfläche des zu bearbeitenden Werkstückes verbunden bleiben, dies trifft zu für die Herausbildung von Makrostrukturen 2, während Mikrostrukturen 3 an der Oberfläche durch eine gezielt eingestellte hohe Prozessdynamik herausgebildet werden, die durch hervorgerufene Schmelzbadturbulenzen und -verwirbelungen, durch die Überlagerung und Vernetzung von Schmelz- und Erstarrungsbereichen und dadurch entstehen, dass sich sehr kleine Schmelzbadbereiche kurzzeitig von der Oberfläche lösen und an anderer Stelle wieder anlagern. Dabei entstehen unregelmäßige Abriss- und Wiederanlagerungsstellen, wie in Figur 2 in prinziphafter Darstellung gezeigt und durch die bildhaften Darstellungen der Figuren 3 und 4 dokumentiert.

Aus den Figuren ergibt sich auch, dass die Makro- und Mikrostrukturen 2, 3 als Kombination von Makro- und Mikrostrukturen 2, 3 ausgebildet werden und weitestgehend gekennzeichnet sind durch die räumlichen Berg- und Tal-Geometrien der aufgeschmolzenen und abgekühlten Oberflächen der metallischen Werkstücke.

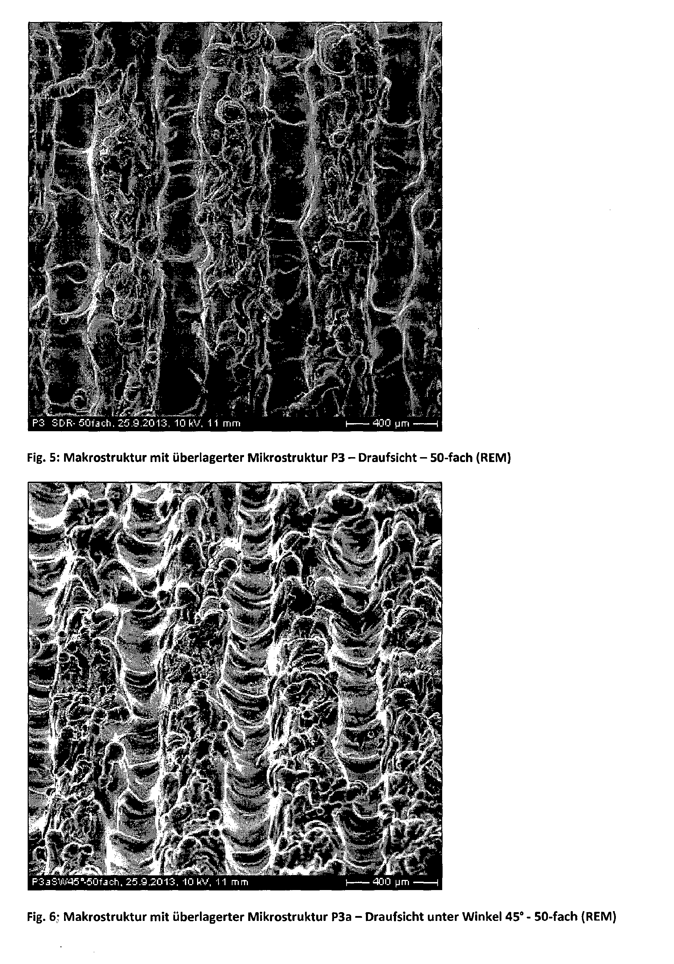

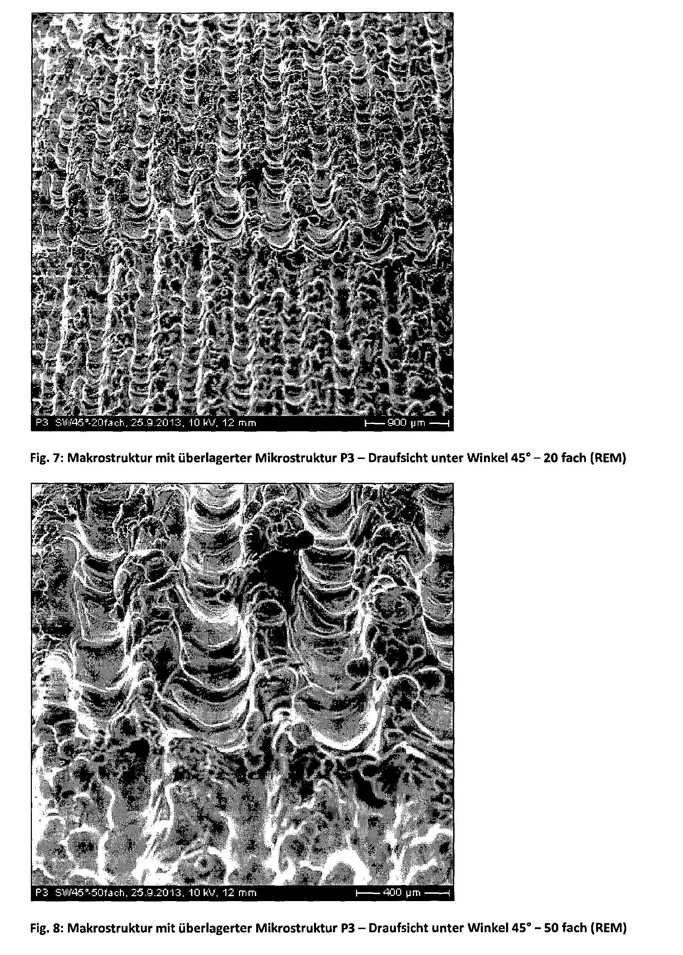

Die Figuren 5 bis 8 zeigen REM-Aufnahmen mit Teilausschnitten von Werkstücken mit aufgebrachten Makro- und Mikrostrukturen 2, 3. Diese Darstellungen verdeutlichen eindeutig die Überlagerung der Mikrostrukturen 3 zu den Makrostrukturen 2. Die Darstellungen verdeutlichen auch, dass zwischen den Makro-/Mikrostrukturen 2, 3 in wechselnder Folge jeweils Täler 4 herausgebildet werden, wobei die Ausbildung und Ansicht der Täler 4 zwischen den Mikro- und Makrostrukturen 2, 3 deutlich sichtbar dargestellt sind.

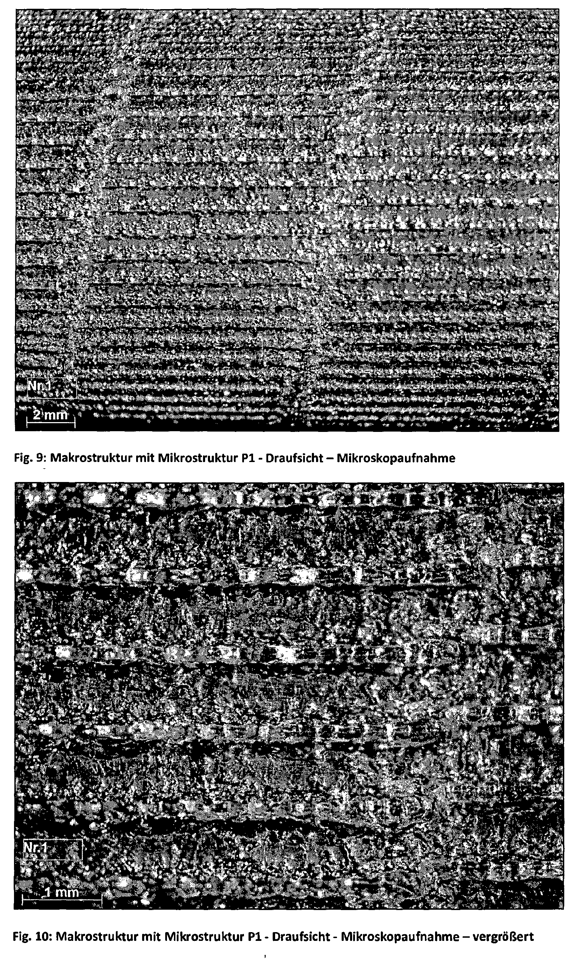

Die beiden fotografischen Ansichten der Figuren 9 und 10 zeigen in Mikroskopaufnahmen Draufsichten von Werkstücken, an deren Oberflächen längs verlaufende Makro- und Mikrostrukturen 2, 3 sichtbar sind.

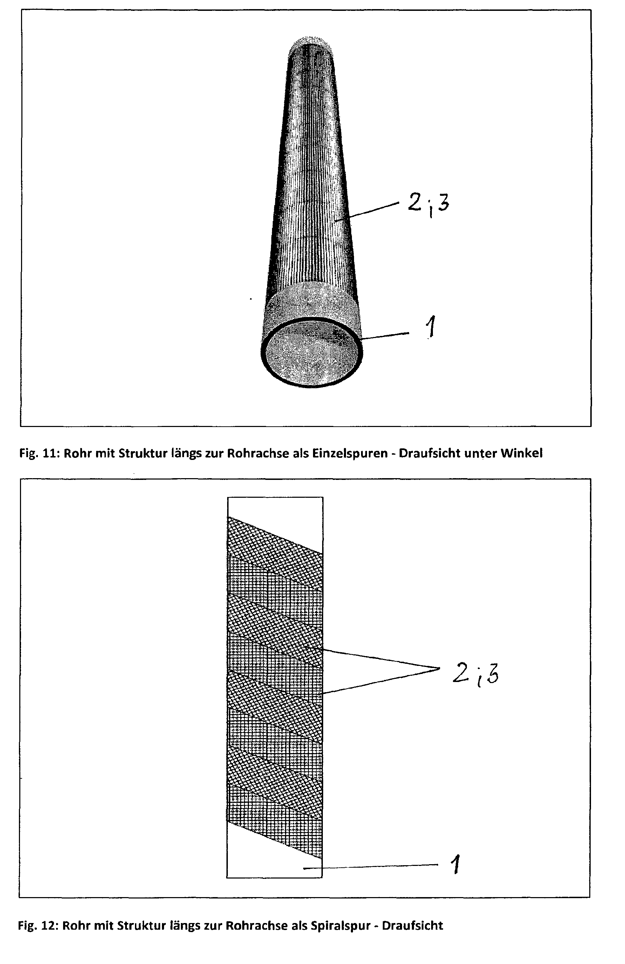

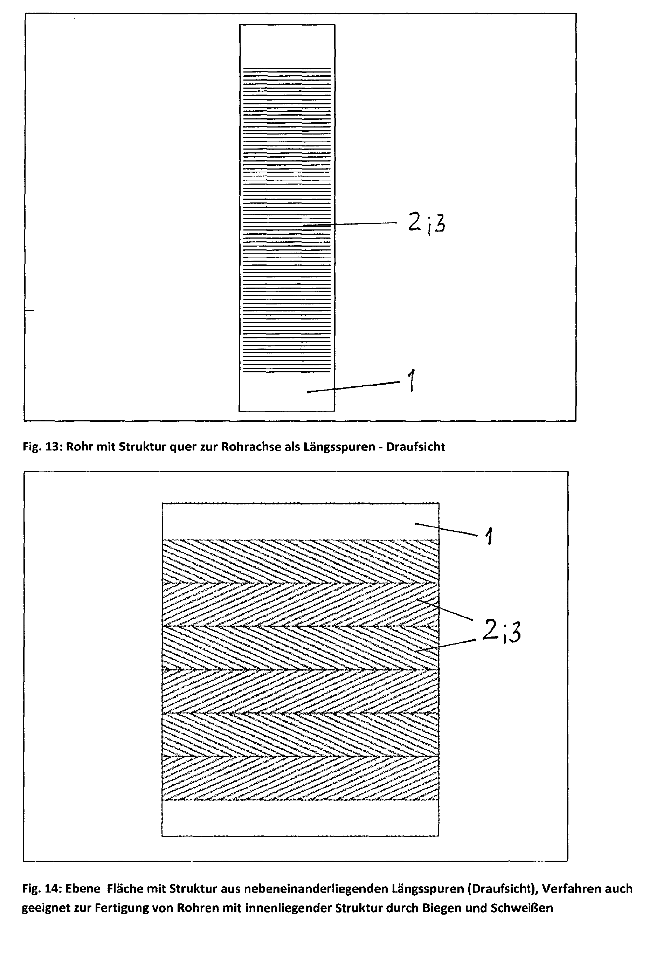

Weitere Formen und Anordnungen der Makro- und Mikrostrukturen 2, 3 auf zylindrischen Werkstücken (Rohren) zeigen die Figuren 11 bis 13. So zeigt die Figur 11 die Anordnung der Makro- und Mikrostrukturen 2, 3 am Umfang eines Rohres 1 als Einzelspuren, während in der Figur 12 ein Rohr dargestellt ist, welches auf seinem äußeren Umfang mit Makro- und Mikrostrukturen 2, 3 ausgebildet ist, die in Spiralform herausgebildet wurden. Gemäß der Figur 13 ist die herausgearbeitete Struktur auf einem Rohr 1 quer zu seiner Längsachse in Längsspuren ausgebildet.

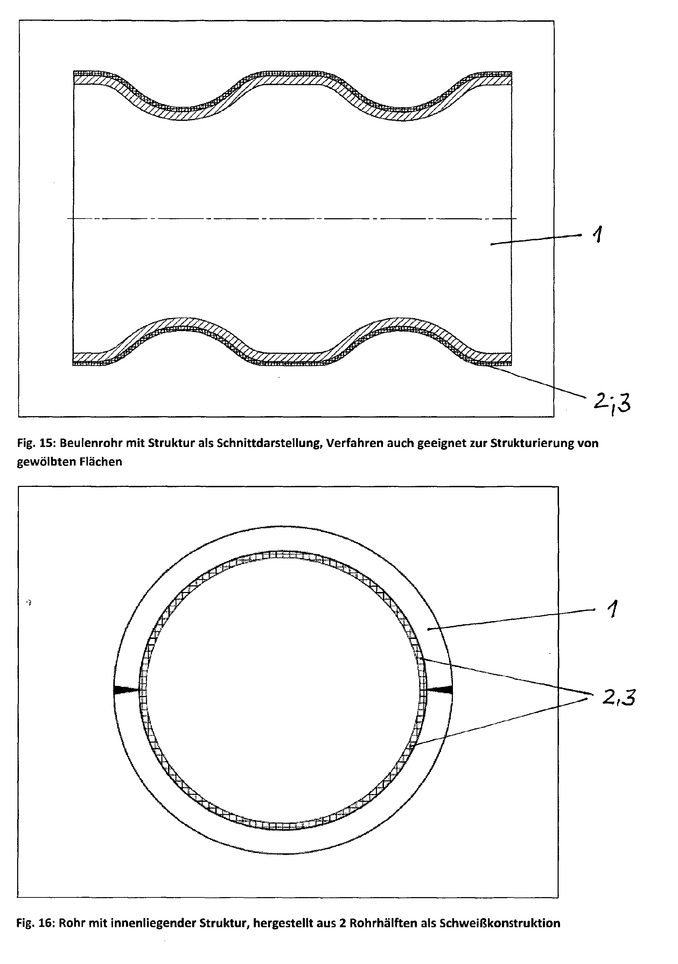

In der Figur 14 ist eine ebene Fläche eines Werkstückes gezeigt, auf deren Oberfläche Strukturen aus nebeneinanderliegenden Längsspuren herausgearbeitet wurden, wobei sich dieses Verfahren auch zur Fertigung von Rohren mit glatten, äußeren Oberflächen und mit innenliegenden Makro- und Mikrostrukturen 2, 3 eignet. Diese werden erzeugt, indem Flächenteile entsprechend profiliert werden und dann durch Biegen und Schweißen Rohre mit der inneren Struktur ausgebildet werden, wie in Figur 16 dargestellt ist.

Ein wesentlicher Vorteil des vorgestellten Verfahrens besteht darin, dass das Verfahren in unterschiedlichen technischen Gebieten angewendet werden kann, insbesondere für Rohr- und Plattenwärmeübertrager bei wärmetechnischen Prozessen, so für Verdampfungsprozesse, Kondensationsprozesse und Wärmeübertragungsprozesse.

Einsetzbar bzw. anwendbar ist das Verfahren auch bei kältetechnischen und chemischen Prozessen sowie in der energetischen Biomassennutzung, in der Rohrstoffförderung und -verarbeitung sowie in geschlossenen Kühlprozessen. In all diesen Anlagen kommen metallische Leitungen zum Einsatz, die mit unterschiedlichen Querschnittsprofilen ausgebildet sind. Dies können geschlossene Rohre sein, Rohre die in Schweißkonstruktion ausgebildet werden oder auch am äußeren Umfang mit Verformungen ausgebildet sind, so beispielsweise Beulenrohre. Ebenso können ebene und gewölbte Flächen beliebiger Körper mit Strukturen versehen werden.

Hier kommt der Vorteil des vorgestellten Verfahrens insbesondere zum Ausdruck, da durch die Herausbildung von Makro- und Mikrostrukturen 2, 3 auf den Wandungen dieser Bauelemente, ob an der Innenwandung oder an der Außenwandung, deren Oberflächen wesentlich vergrößert werden, was sich auf die entsprechenden Prozesse sehr positiv auswirkt.

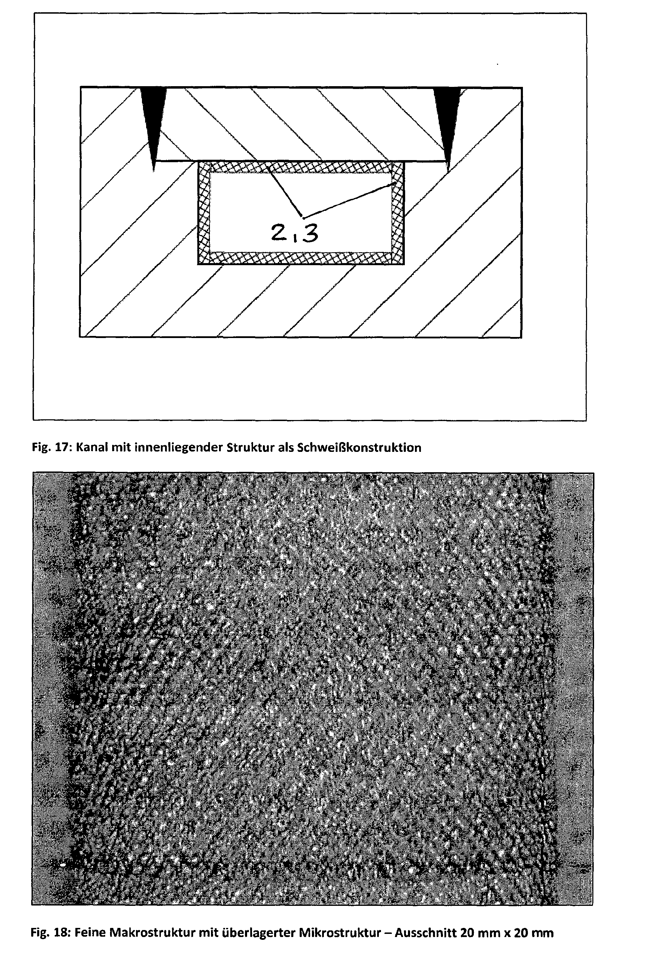

Die Figuren 15 bis 17 zeigen in Schnittansichten ein Beulenrohr 1, welches an seinem äußeren Umfang mit einer Makro- und Mikrostruktur 2, 3 ausgebildet ist, während die Figur 16 ein Rohr 1 mit innenliegender Struktur, hergestellt aus zwei Rohrhälften in Schweißkonstruktion zeigt, auf deren Innenseiten Makro- und Mikrostrukturen 2, 3 herausgebildet sind. Die Figur 17 zeigt einen Kanal mit innenliegender Struktur als Schweißkonstruktion, bei der die inneren Strukturen auf der unteren und auf den beiden Seitenflächen bei geöffnetem Kanal durch einen Elektronenstrahl herausgebildet werden, während das Verschlussteil gesondert mit der profilierten Innenfläche ausgebildet wird, so dass bei Einsatz des oberen Teilstückes ein Kanal entsteht, dessen Innenwandungen umfänglich mit einer Makro- und Mikrostruktur 2, 3 ausgebildet sind.

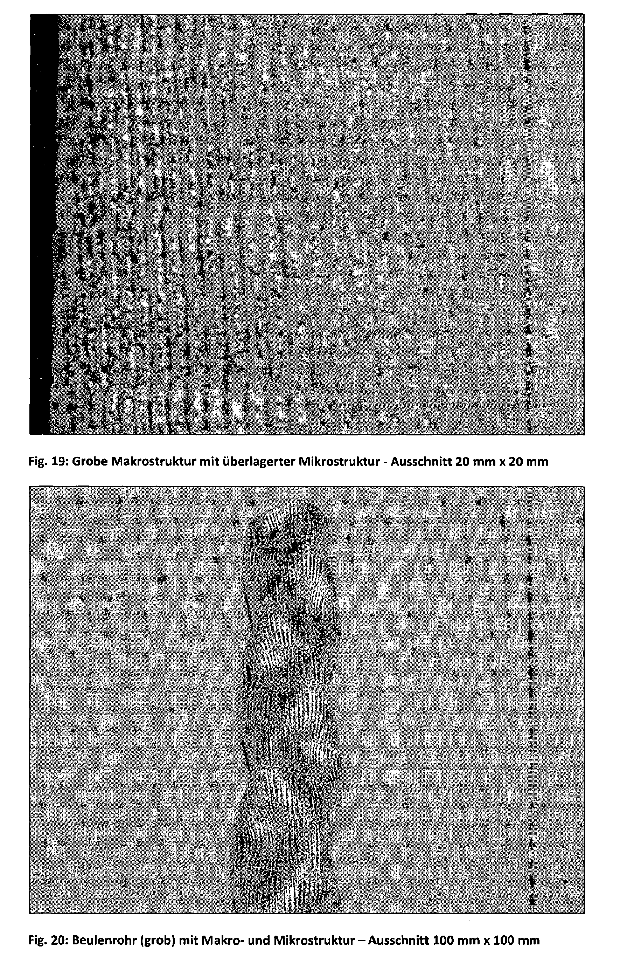

Die Figur 18 zeigt die Ausbildung einer feinen Makrostruktur mit überlagerter Mikrostruktur auf einem äußeren Umfang eines Rohres. Eine grobe Makrostruktur mit überlagerter Mikrostruktur ist in der Figur 19 dargestellt.

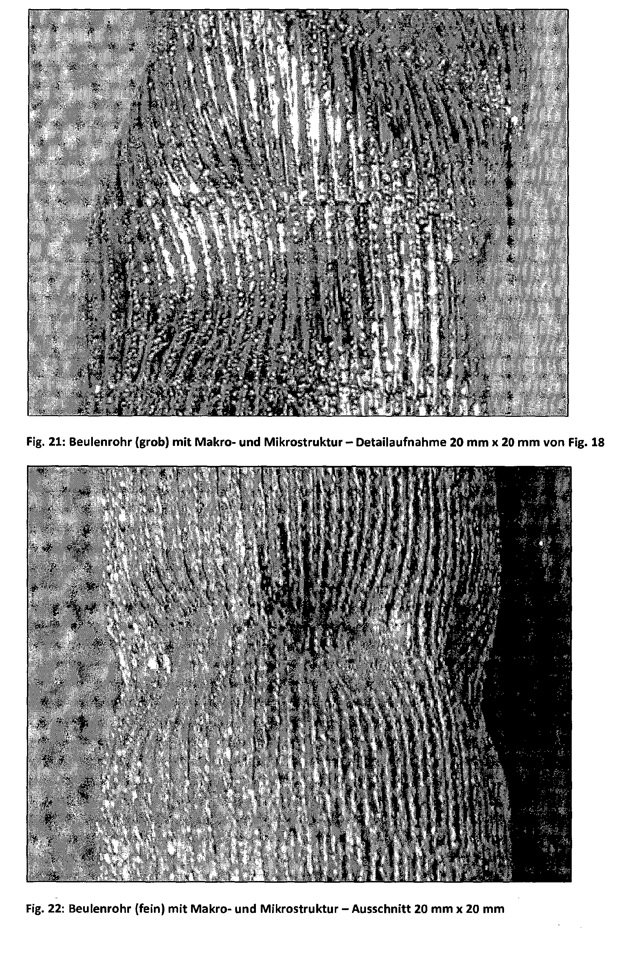

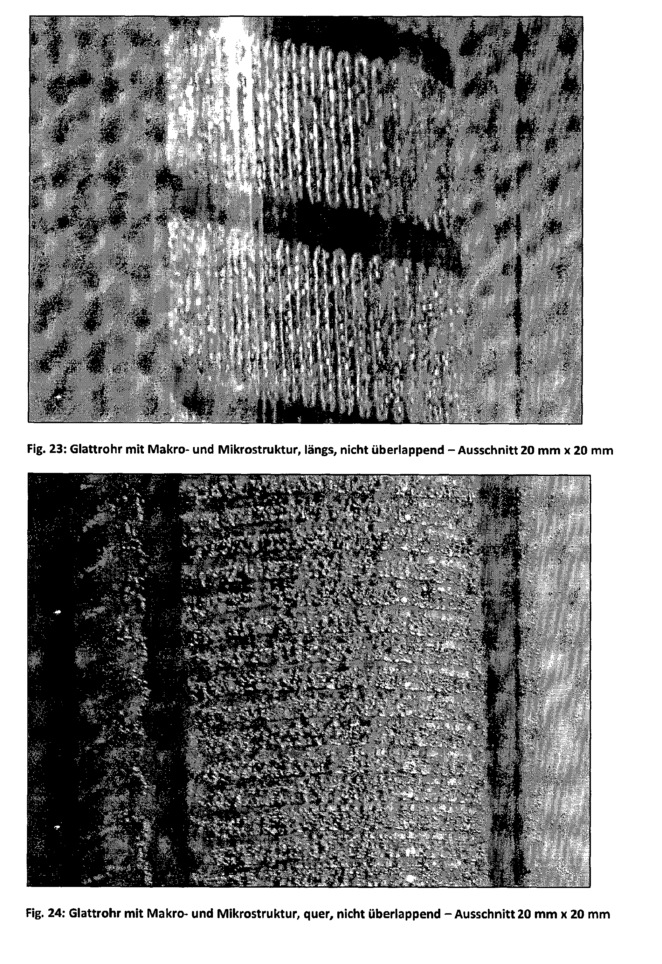

Die fotografischen Ansichten nach den Figuren 20 bis 22 zeigen jeweils ein Beulenrohr in Teilabschnitten, das mit einer groben Makro- und Mikrostruktur 2,3, Figur 20 und 21, und mit einer feinen Makro- und Mikrostruktur 2,3, Figur 22, ausgebildet ist. Gleichzeitig verdeutlichen diese drei Darstellungen des Beulenrohres in welcher Art und Weise die Mikrostrukturen auf dem Beulenrohr angeordnet werden können. So können diese Makro- und Mikrostrukturen 2, 3 linear, parallel nebeneinander oder wendelförmig auf dem äußeren Umfang herausgebildet werden. Eine weitere Ausbildung und Anordnung von Makro- und Mikrostrukturen 2, 3 auf einem Glattrohr zeigen die Figuren 23 und 24, wobei gemäß Figur 23 die Makro- und Mikrostrukturen 2, 3 längs, nicht überlappend, auf dem äußeren Umfang des Glattrohres angeordnet sind und in dieser Längsform an dem äußeren Umfang verlaufen. Demgegenüber zeigt die Figur 24 den Verlauf der Makro- und Mikrostruktur 2, 3 auf einem Glattrohr quer zu dessen Längsachse.

Grundlage für die Herausbildung von Makro- und Mikrostrukturen gemäß der vorliegenden Erfindung sind die Anwendung der verfahrensbedingten Parameter wie in nachfolgender Tabelle beispielhaft aufgeführt.

| **Parametersatz** | **minimal** | **maximal** |
|---|---|---|
| | | |

| Material | Metall | Metall |
|---|---|---|
| | | |
| Beschleunigungsspannung [kV] | 50,0 | 150,0 |
| Strahlstrom [mA] | 1,0 | 100,0 |
| Strahlleistung [kW] | 1,0 | 15,0 |
| | | |

| Kathodentyp | beliebig | beliebig |
|---|---|---|
| | | |
| Generatorvakuum [mbar] | 5,00E-06 | 1,00E-04 |
| Kammervakuum [mbar] | 5,00E-05 | 5,00E-02 |
| | | |
| Arbeitsabstand [mm] | 100,0 | 1000,0 |
| Strahldurchmesser im Fokus [mm] | 0,1 | 0,6 |
| Bearbeitungsgeschwindigkeit [mm/s] | 10,0 | 100,0 |
| | | |
| Pulsfrequenz [Hz] | 10,0 | 200,0 |
| Pulsdauer [ms] | 5,0 | 100,0 |
| Pulstastverhältnis [%] | 5,0 | 50,0 |
| Pulseinschaltzeit [ms] | 1,0 | 20,0 |
| | | |

| Ablenkfigur | diverse | diverse |
|---|---|---|
| Ablenkfigurpunktanzahl | 100 | 4000 |
| Ablenkfigur-Amplitude X Breite [mm] | 1,0 | 50,0 |
| Ablenkfigur-Amplitude Y Höhe [mm] | 1,0 | 50,0 |
| Ablenkfigurfrequenz [Hz] | 100,0 | 2000,0 |
| Ablenkfigurlaufzeit [ms] | 0,5 | 10,0 |
| | | |
| Flächenstrukturrate [mm²/s] | 10,0 | 5000,0 |

## Patentansprüche

1. Verfahren zur Modifikation der Oberflächen von metallischen Werkstoffen zur Herausbildung von strukturierten Oberflächen auf rohr- und plattenförmigen und beliebig geformten Körpern,
**dadurch gekennzeichnet,**
**dass** die Oberflächenstrukturen in Form von Makro- und Mikrostrukturen ausgebildet sind, bei dem unter Anwendung eines Elektronenstrahles und unter Beachtung geforderter Oberflächenstrukturen über die Einstellung wählbarer Parameter des Elektronenstrahles wie Strahlpulsung, Strahlablenkung, Strahlfokussierung und Relativbewegung zwischen Werkstück und Elektronenstrahl auf den Oberflächen von metallischen Werkstoffen definierte wiederholbare Makro- und Mikrostrukturen erzeugt werden.

2. Verfahren nach Anspruch 1,
**dadurch gekennzeichnet,**
**dass** durch die Kombination von Strahlpulsung, dynamischer Strahlablenkung, Strahlfokussierung und ein- oder mehrdimensionaler Relativbewegungen zwischen Werkstück und Elektronenstrahl Strukturen, bestehend aus regelmäßigen Makrostrukturen mit überlagerten, unregelmäßigen, stochastischen Mikrostrukturen herausgebildet werden.

3. Verfahren nach Anspruch 1,
**dadurch gekennzeichnet,**
**dass** die Strahlpulsung des Elektronenstrahls bei Pulsfrequenzen im Bereich von 10 Hz bis 200 Hz, bei Pulsdauern zwischen 5 ms und 100 ms und bei Pulstastverhältnissen von 5 % bis 50 % durchgeführt wird.

4. Verfahren nach Anspruch 1,
**dadurch kennzeichnet,**
**dass** der Elektronenstrahl während eines jeden Pulses durch eine programmierte Ablenkfigur über Magnetspulen in zwei Achsen (x, y) dynamisch und periodisch bewegt wird, dabei die Ablenkfigur aus 100 bis 4000 Punkten besteht, wobei die Abmessungen der Ablenkfigur unabhängig voneinander eingestellt werden, deren Höhen zwischen 5 bis 50 mm und Breiten zwischen 1 bis 50 mm liegen und die Ablenkfigur einmal komplett, mehrmals komplett oder nur teilweise abgefahren wird.

5. Verfahren nach den Ansprüchen 1 bis 4,
**dadurch gekennzeichnet,**
**dass** durch die Wahl und Einstellung der Parameter Strahlpulsung, Strahlablenkung, und Strahlfokussierung eine regelmäßige Makrostruktur und eine unregelmäßige Mikrostruktur auf metallischen Werkstückoberflächen ausgebildet werden.

6. Verfahren nach den Ansprüchen 1 bis 5,
**dadurch gekennzeichnet,**
**dass** die Größen der Makrostrukturen im Bereich von 100 µm und 2 mm und die Größen der Mikrostrukturen im Bereich zwischen 10 µm und 200 µm liegen.

7. Verfahren nach einem der vorhergehenden Ansprüche
**dadurch gekennzeichnet,**
**dass** die Ablenkfiguren aus einzelnen Punkten, die nacheinander abgefahren werden und aus 100 bis 4000 Punkten bestehen, die Ablenkfrequenzen im Bereich von 10 Hz bis 2000 Hz, die Punktfrequenzen im Bereich von 1000 Hz bis 8 MHz und die Verweilzeiten pro Punkt zwischen 0,125 µs und 1 ms liegen.

8. Verfahren nach den Ansprüchen 1 bis 7,
**dadurch gekennzeichnet,**
**dass** die Mikro- und Makrostrukturen als definierte Vertiefungen und Erhöhungen (Berg-Tal-Strukturen) ausgebildete Startpunkte sind für die Bildung von Keimen von Verdampfungsflächen, diese eine drastische Beschleunigung des Verdampfungsprozesses bewirken, wobei die Oberflächen der definierten Mikro-/Makrostrukturen in ihrer geometrischen Gestaltung in Abhängigkeit von der Oberflächenspannung des zu verdampfenden Mediums unterschiedlich ausgebildet sind und eine Vergrößerung der Oberflächen der Mikro-/MakroStrukturen erzielt wird, dies durch Herausbildung wiederholbarer Mikro-/ Makrostrukturen.

9. Verfahren nach den Ansprüchen 1 bis 8,
**dadurch kennzeichnet,**
**dass** in Körpern/Werkstücken mit ausgebildeten Nuten an der Bodenlage allein und/oder an den Seitenlagen und/oder ergänzend an der Innenfläche der einzuschweißenden Abdeckplatten Mikro-/Makrostrukturen eingearbeitet werden, die nach dem Einschweißen der Abdeckplatten gleichfalls durch den Elektronenstrahl einen in sich geschlossenen einseitigen, mehrseitigen oder allseitigen mikro-/makrostrukturierten Verdampfungskanal bilden.

10. Verfahren nach den Ansprüchen 1 bis 9,
**dadurch gekennzeichnet,**
**dass** bei der Rohrherstellung von geschweißten Rohren der der Prozess der Mikro-/Makrostrukturierung durch lokales Aufschmelzen der Oberfläche des abzuwickelnden Coils als vorgelagerter Arbeitsgang vor dem Beginn der Formung des Bleches zum Rohr eingebracht wird.

11. Verwendung des Verfahrens nach Anspruch 1, **kennzeichnet durch**
den Einsatz bei der Herstellung von Erzeugnissen für die Wärmeübertragung, bei der Gestaltung von Oberflächen von Katalysatoren und Oberflächen von Erzeugnissen, in denen eine Verwirbelung von Flüssigkeiten und Gasen stattfindet, ferner bei der Unterstützung mechanischer Prozesse bei der Veränderung von Gleiteigenschaften zwischen Materialien und der Erhöhung der Verschleißbeständigkeit **durch** gleichzeitig erzeugte hohe Härten an den Oberflächen der bearbeiteten Materialien.
